# EUROPEAN PATENT SPECIFICATION

(11) **EP 1 202 632 B1**
(45) Date of publication and mention of the grant of the patent: **10.06.2009**
(21) Application number: 99941566.4
(22) Date of filing: 09.08.1999
(51) Int. Cl.: A21D 10/02, A21D 6/00, A21D 13/08

(54) **REFRIGERATED BAKERY DOUGH PRODUCT**
GEKUEHLTES BACKWAREN- FERTIGTEIG PRODUKT
PATE REFRIGEREE DE PRODUITS DE BOULANGERIE-PATISSERIE

(30) Priority: 23.07.1999 WO PCT/EP99/05357
(43) Date of publication of application: 08.05.2002
(73) Proprietor: SOCIETE DES PRODUITS NESTLE S.A., 1800 Vevey (CH)
(72) Inventor: BLASCHKE, Dieter, CH-1814 La Tour-de-Peilz (CH); NAIRN, Peter, CH-1806 Saint-Légier (CH); MARTIN, Merrie, New Milford, CT 06776 (US); SCOVILLE, Eugene, New Milford, CT 06776 (US); CRAMER, Jennifer, New Milford, CT 06776 (US); FUCHS, Karl, Christian, Gaylordsville, CT 06755 (US)
(74) Representative: Rupp, Christian
(86) International application number: PCT/EP1999/005821
(87) International publication number: WO 2001/006858

(56) References cited:
- EP-A- 0 900 527
- WO-A-92/10101
- WO-A-97/31539
- WO-A-98/26666
- WO-A-99/66802
- US-A- 4 445 835

## Description

### BACKGROUND ART

The invention relates to a ready-for-use bakery dough product which can be preserved in the refrigerator and which is prepared from flour, sugar, baking powder and fat.

Bakery products such as brownie products are generally provided as dry mixes to which eggs, oil and water and other ingredients such as nuts or chocolate pieces are added, the product is appropriately mixed and then placed in a pan for baking. Furthermore, with these dry mixes, the consumer has to prepare the bakery dough, which takes time and necessitates the use of different types of kitchen utensils.

The aim of the present invention is to provide to the consumer a ready-to-bake bakery dough, whereby the consumer has no more need of the raw dough making himself and therefore does not need kitchen utensils. This is therefore time saving, necessitates no need of all the ingredients at home and guarantees a consistent quality of the dough product.
WO 98126666 and WO99/66802 (relevant under Art. 54(3) EPC only) disclose fody-for-use cookie doughs provided in a precent form or in a form with groover.

### SUMMARY OF THE INVENTION

The present invention now provides the consumer with a ready-for-baking bakery dough product which requires only a minimum of manipulation by the consumer.

The invention relates to a ready-for-use bakery dough product which can be preserved in the refrigerator and which is prepared from flour, sugar, baking powder and fat, in which the content of baking powder is between 0.1 and 3.0% the water content is 13.5% - 20% and which is provided in a form having grooves or score lines which define the final individual pieces of the baked product. These pieces are broken off and placed in a baking tin and baked. During baking, the pieces join together to form a cake, brownie or quick bread, etc. which is then cut into pieces, using the lines created during baking by the joining of pieces.

In an alternative, it is also possible to put every piece into smaller trays or forms to give a plurality of individual items after baking. This is conveniently achieved by providing the bakery dough product in the form of a block, preferably a rectangular block, which includes grooves criss-crossing the length and width of the block to define square or rectangular pieces or portions. For the cooking in the oven, the block is broken into pieces and when these pieces are placed in a rectangular or square pan and baked in an oven, the pieces rise and flow until they come into contact and so form a final product including lines of demarcation which define the individual portions.

In addition, if desired, the pieces of the dough product can be provided with different colors, different textures, specific figures, or decorations thereon or with fillings therein to enable the consumer to prepare these variations of the final products from the single bakery dough product or block.

### BRIEF DESCRIPTION OF THE DRAWINGS

Preferred embodiments of the invention, specifically in the form of a block of bakery dough, can be observed by reviewing the following detailed description and appended drawing figures, wherein:
Figure 1 is a perspective view of a bakery dough block in accordance with a first embodiment of the invention;
Figure 2 is a perspective view of a bakery dough block in accordance with another embodiment of the invention;
Figure 3 is a cross-sectional view of the bakery dough block of Figure 2, viewed in a perpendicular direction to the longitudinal axis of the block; and
Figures 4 and 5 are cross-sectional views of additional embodiments of bakery dough blocks of the invention.

### DETAINED DESCRIPTION OF THE INVENTION

The present invention relates to a new form of pre-mixed or pre-prepared bakery dough products which is ready for baking. The term "bakery dough" is used to mean pre-mixed doughs of the types used for making bakery items where the dough is provided in the form of a sufficiently solid or semi-solid block that is typically provided under refrigerated rather than frozen conditions and which is then placed into a baking tin for baking.

The bakery dough is a brownie dough, or a cake dough, or a muffin dough or cobbler dough, or any other dough product, which can be baked in an oven, in a baking tin or in individual forms or cups. For instance, the individual forms can be made of baking paper or aluminium foil or maybe also be moulds in a tray.

The block is broken into smaller pieces along the score lines provided on the body and preferably on its upper surface so that after baking individual baked items can be made. The bakery dough product according to the invention can be provided in any form but the block form is particularly advantageous. This block may be either of parallelepipedal form, or of cylindrical form, or of prismatic form.

To facilitate separation of the pieces, it is necessary to have a block of dough in which either an imprint or a groove or a pre-cut has been made so as to facilitate breaking in order to make small pieces which are placed in a baking tin for oven baking. It is therefore sufficient to have the pieces simply broken off or pulled out along the grooves or to have a knife with which cuts are made fully in the grooves. There is thus no waste due to forming and no manipulation on the part of the consumer, other than breaking or cutting along the grooves and placing in the baking tin or in individual baking forms.

In the present description, the contents are given by weight. Baking powder is understood to mean a mixture of at least one bicarbonate or carbonate salt, at least one acidifying agent and at least one separating agent. None of the constituents of this mixture is critical. Sodium bicarbonate is preferably used with sodium diphosphate or disodium dihydrogen pyrophosphate with a starch as separating agent. These mixtures are directly available commercially with a fixed composition. For example, the bicarbonate is present in an amount of 30%, the acid in an amount of 40% and the separating agent in an amount of 30%. In a specific embodiment, it is also possible to use only sodium bicarbonate, in an amount f 0.03 to 1.0 %, preferably 0.5%.

The flour used is cereal flour with a high content or with a lower content of proteins. Any type of flour can be taken into consideration. The flour content is normally between 10 and 40%, preferably between 27 and 34%.

The sugar used is not critical. Its content is between 10 and 40%. The sugars which can be used are fructose, sucrose, dextrose and maize syrup. Sucrose is preferred, for example, in the form of granulated sugar. The resulting dough should have a good resistance during preservation in the refrigerator, that is to say that it should be quite firm, but should nevertheless spread well during baking. It is with sucrose that this result is best achieved. It is also necessary to have a dough with a water content in the order of 13.5% to 20%. In order to increase the sugar content, it is also possible to add a sugar substitute such as sorbitol or any other known sugar substitute.

The fat used in the dough composition according to the invention is solid or liquid fat at room temperature. It can be of animal or plant origin, for example lard, tallow, margarine, maize oil, copra oil, palm oil, sunflower oil, soya bean oil. It is also possible to use fat mixtures. These fats are emulsified or stabilized with mono- or diglycerides or other emulsifiers known in the art. For example, according to the invention, margarine which already contains the emulsifier is used. The fat content is between 10 and 25%. The type of fat used also has an influence on the flow capacity of the dough during baking.

As texturing agent, whole egg or egg white at a content of between 0 and 10% is used, preferably at a content of 2 to 5%.

The dough according to the invention generally contains flavoring agents, such as vanilla flavor and cocoa powder. The inside and/or surface of the dough may include solid pieces or inclusions of various edible materials. For example, chocolate, oat flakes, raisins, groundnut pieces, hazelnuts, confectionery or sugar pieces, etc. To a certain extent, the pieces or inclusions may be flowable during baking. The size of these pieces is not critical and may vary between 1 and 10 mm. Dark, milk or white chocolate may be used. The content of chocolate is preferably between

0.1 and 30%. The chocolate used is a commercial chocolate or a chocolate which can be used in pastry making or in catering.

It is very convenient according to the invention to have a block of dough already having the correct thickness in order to avoid having to further roll out the dough. To this effect, a block is obtained which has a thickness of between 1 and 3 cm.

As regards the grooved bakery dough block, it is envisaged so as to make it into parallelepipedal pieces of between 3 and 4 cm in size and 0.5 to 3 cm thick.

The size of the grooves in the block is not critical but will normally have a width and depth of the order of 1 to 5 mm. In this case, the consumer should either break the blocks as for a chocolate bar, or use a knife to cut along the grooves.

The invention is described in connection with a brownie dough. As a practical embodiment, the dough block thickness may be 2-3 cm with the grooves marking 3.5 x 3.5 cm pieces. For a block of 300 g, there would be 3 x 3 pieces, while for a block of 400 g, 3 x 4 pieces and for a block of 500 g, 3 x 5 pieces can be provided. The 400g whole block has for example a size of a rectangle of around 11 x 14 cm with a thickness of around 2.5 cm.

The entire grooved block may be baked in a pan of substantially double the size: for the example of a rectangle of around 11 x 14 cm, it is possible to use a square baking of 20 x 20 cm. The block is broken or cut into the defined pieces which are then distributed in the tray in a configuration where they are individually spaced apart from each other so that at the end of the baking, the pieces have joined together due to the rising and flowing effects, but the lines of separation practical for cutting into portions remain visible. Generally, the dough blocks are sized to fit in conventional brownie or cake baking pans. Various pan sizes can be used as long as the number of pieces is adapted to the pan dimensions. After the block is broken into pieces and placed in the pan, it is ready for baking under conventional conditions, such as at a temperature of about 175 C for 20 to 40 minutes. After baking, the final product is cooked correctly. Also, the baked product includes lines where the pieces previously separated have joined together. The consumer can cut the baked product along these lines to form individual servings.

In an alternative of the invention, the grooved block is separated into a plurality of individually predetermined pieces which are then individually positioned in individual forms, recesses or containers. These forms, recesses or containers are sized so as to leave sufficient room to enable each individual piece to rise and bake properly. This method is more directed to the preparation of small cakes, e.g., muffins.

The block of dough is wrapped conventionally, for example in a wrapping based on synthetic material or based on covered carton, so as to be protected from air and moisture prior to use. The shelf life of the dough according to the invention in a refrigerator is normally on the order of several months.

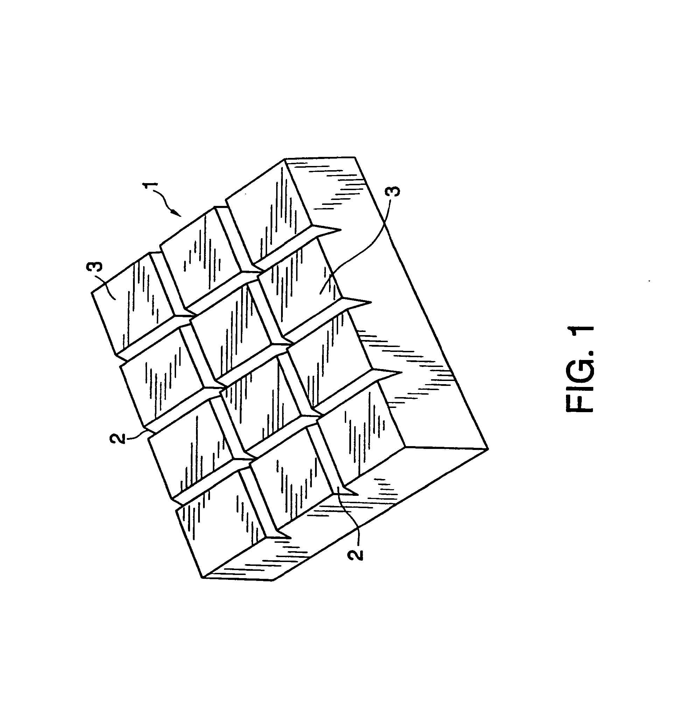

A typical block of bakery dough according to the invention is shown in Figure 1. The block (1) of bakery dough is prepared with the composition stated in Example 1. The preparation is made conventionally and when the block is formed, the grooves (2) are formed with any device known in the technique, for example with marker rolls. The choice therefore exists either to make only a groove imprint, or to make a notch or partial cut. As noted above, at the time of use, the pieces are broken off, one by one, and the various pieces are placed individually in a baking tin or individual forms and put in the oven for baking.

The invention also relates to a ready-for-use bakery dough product in the form of a block which exhibits one or more of the following features;
a) at least two different layers,
b) at least two different strips for each piece taken from the block,
d) the same or a different stamping on the top of each piece,
e) the same or a different decoration on the top of each piece,
f) a filling which is different from the basic dough and is the same or different in each piece, or
g) pre-cut forms of different specific shapes or sizes.

According to one embodiment of the invention, the block has at least two different layers. The number of layers is not critical, but from a practical point of view, this number of layers is typically between 2 and 6. Preferably, the number of layers is 2. These layers are more specifically of different compositions. This can be done for example by adding to the basic dough different types of flavors or colors, which are accepted in the food area. For example, it is possible to have a basic dough as first layer and dough which has cocoa as the second layer, wherein the resulting cake has both a clear or light face and a dark face. The way for producing this layered dough can be either by extrusion, sheeting or by other ways which are known in the art. The layers can also be of different texture. For instance, a creamy layer can be interposed between two non-creamy layers or a creamy layer can be positioned at the bottom or top of the block. In fact, the invention contemplates a wide range of layer disposal having different characteristics, composition, texture, taste, shapes and/or colors.

In a possible embodiment, two or more doughs can be swirled together to produce a marbled effect in the block or in one of the layers or strips of the block.

According to another embodiment of the invention, the bakery dough block has at least two different strips for each piece taken from the block, This number of strips is not critical, but typically would be between 2 and 6.
Preferably, the number of strips is four. If desired, these dough strips may be of different compositions. This can be done for example by adding to the basic dough different types of acceptable food grade flavors or colors. For example, it is possible to have a basic dough as first strip and a dough that contains cocoa as a second strip. The resultant bakery would then have a clear or light portion and a dark portion. The way for producing multiple dough strips can be the same as for the layers, i.e., by extrusion, sheeting or other ways that are known in the art. Also, the strips can be placed in adjacent relation either horizontally or vertically in the dough block. Also, two or more doughs can be swirled together to produce a marbled effect in at least one of the strips.

Here also, the invention contemplates a wide range of strip disposal having different characteristics, composition, texture, taste, shapes and/or colors.

According to another embodiment of the invention, each piece of the dough block is stamped on the top with a recognizable design or image, for example an animal or a geometric shape. In this case, a known stamping device is used for creating an indentation on the top of the pieces. The dough can be a classical dough in its composition since the ornamentation is visible on the top face of the baked item.

According to yet another embodiment of the invention, each piece of the block receives a decoration on the top face. This decoration can be either precisely placed or randomly put on the tops of the pieces of the block. The possible decorations are seeds, for example sesame seeds, or chocolate, or nuts, or sugar, or spices, or powders or an icing, or sugar balls or other decorations. The decoration can be put on the top of the pieces either by a sprinkling device or by manual, robotic or mechanical means, all of which are known generally in the art.

According to another embodiment of the invention, the block of dough has a filling for each piece which filling is different from the basic dough. This filling could be either a creamy or a liquid filling. The filling can be also a solid filling, like a chocolate dough or another aromatized dough. In the case of a liquid filling, it is so calculated that the filling remains inside the basic dough after cooking. The amount of the filling is not critical: this filling can represent from about 5 to 50% of the piece of dough. The way of producing the block could be e.g., by coextrusion, by injection, or by placing the filling in a first layer and then putting a second layer of dough on the filling and first layer.

According to yet another embodiment of the invention, the block has pre-cut forms of different specific shapes or sizes. The aim is to have on the same block different shapes or sizes without having to recycle or reuse any part of the dough. For example, it is possible to have geometrical shapes, like triangles, squares, rectangles, animal shapes or any other shapes.

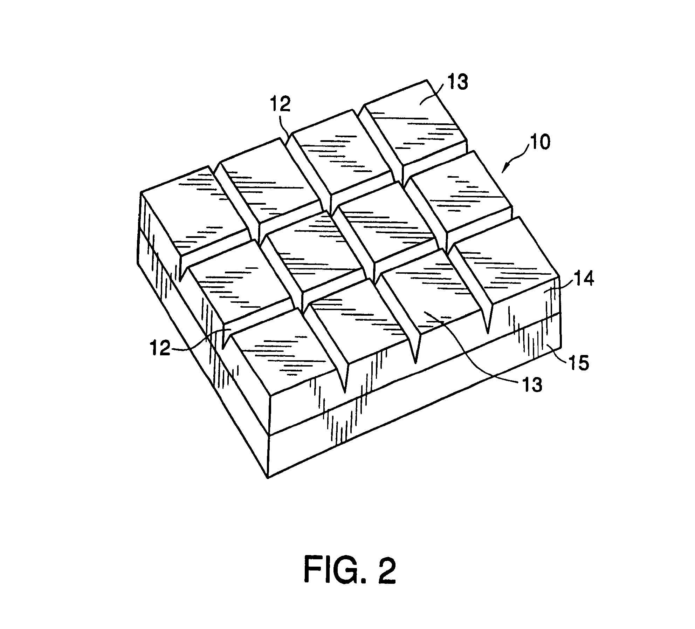

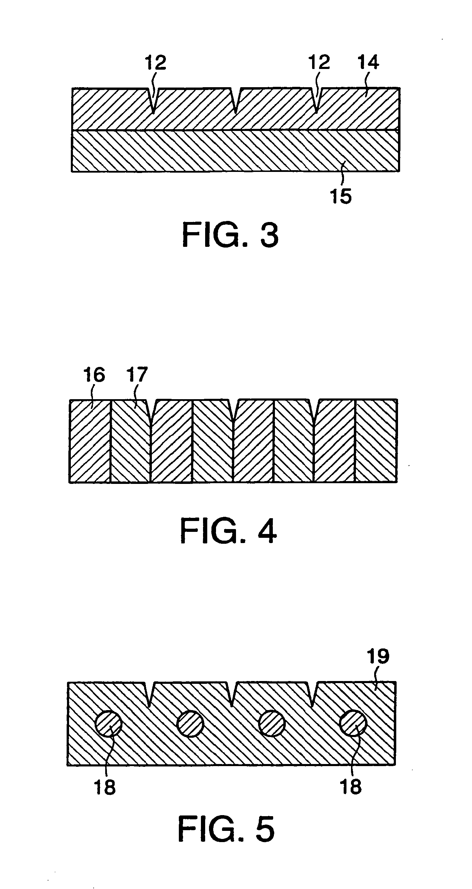

According to Figures 2 and 3, the block (10) of bakery dough is prepared with the composition stated in Example 2. The preparation is made by sheeting and when the block is formed, marker rolls which make it possible to form the grooves (12) are made to pass over it. At the time of use, it is sufficient to break off one by one, the various pieces or dice (13) formed and to place them in a baking tin or individual forms and to put in the oven. If desired, the dice (13) are formed with two layers: the top layer (14) made with a classical dough and the lower layer (15) made with the same dough but with the addition of cocoa such as is commonly used to make conventional bakery items.

Figure 4 gives a section with two strips (16) and (17). Every dice, which has been broken has these both strips (16) and (17). For example, strip (6) is the classical dough as before and strip (17) is the same dough, but with the cocoa.

Another embodiment of the invention is shown in Figure 5, which illustrates a section through the middle of the dice. In this case, there is a filling (18) embedded in the dough (19). This filling is not critical, the only condition being that filling must be capable of withstanding the baking process. The filling can be for example a fruit jam, or chocolate, or hazelnut or a mixture of chocolate and hazelnut or cream cheese, or coconut, or peanut butter. The ratio dough/filling is not critical: this ratio is normally between about 30/70 and 85/15.

### EXAMPLES

The remainder of the description is made with reference to the examples, which illustrate preferred embodiments of the invention.

### Example 1

The various ingredients stated in the table below are mixed, the proportions being in % by weight, to prepare a brownie mix.

| Component | Ex.1 |
|---|---|
| Sugar | 42 |
| Egg Powder | 2 |
| Baking Powder | 0.5 |
| Shortening | 17 |
| Cocoa | 7 |
| Starch /Flour | 11 |
| Flavouring and flavour enhancer | 1.0 |
| Water | 13.5 |
| Chocolate pieces | 6 |

The dough thus prepared is stored for as long as 6 months in the refrigerator. Pieces of a size of about 3.5 x 3.5 cm are broken off the block and then are placed in a greased 20 X 20 cm baking tin for baking. The breaking of the dough block into pieces enables the brownie mix to fill the pan properly to facilitate baking. The pieces are baked for about 25 minutes at 175°C.

### Example 2 illustrative

The various ingredients stated in the table below are mixed for making a ready-for-use brownie dough having two layers. The amounts are in weight %.

| Example | Light dough | Dark dough |
|---|---|---|
| Sugar | 33.3 | 34.5 |
| Whole egg | 9.5 | 9.4 |
| Baking powder | 0.5 | 0.5 |
| Flavouring and flavour enhancer | 0.6 | 0.6 |
| Fat | 15 | 15.6 |
| Water | 3.1 | 3.8 |
| Flour | 38 | 33.2 |
| Cocoa | - | 2.4 |

This two-layer dough is made by sheeting or extrusion and the dough is stored up to 6 months in the refrigerator. The block is broken and the pieces are then baked in an appropriately sized baking tin or pan for 30 minutes at 175°C to form baked brownie pieces that includes different color layers.
The concentration of sugar and flour can be adjusted to achieve the desired workability: the concentration of sugar is increased and that of flour is decreased.

### Example 3 illustrative

This is an example for a small cake that has a filling. The basic dough is the dough of the preceding Example 2 (the light dough). The filling is an apricot jam with a dough/jam ratio of 70/30. This small cake is produced by coextrusion or another suitable technique. As before, the dough is stored in the refrigerator and then baked as in Example 2. The pieces of the block are separated along the groove lines before baking. During the baking, the dough opens and the jam flows on the top of the cake.

In each example, the resultant baked cake was found to be cooked quite uniformly.

## Claims

1. A ready-for-use bakery dough product which can be preserved in the refrigerator and which is prepared from flour, sugar, baking powder and fat, wherein the baking powder is present in an amount of between 0.1 and 3.0 % and the dough product is provided in a form which is pre-cut or which includes grooves or score lines thereon defining pieces of the dough product to be baked into final bakery items, and wherein the water content is 13.5 % to 20%.

2. The dough product of claim 1, in the form of a parallelepipedal block having a surface which includes the grooves or score lines therein.

3. The dough product of claim 2, wherein the grooves or score lines define portions of the block that are of substantially equal size.

4. The dough product of claim 2, wherein the block is a parallelepipedal block and the pieces have a size between 3 and 4 cm and a thickness between 0,5 and 3 cm.

5. The dough product of claim 2, wherein the grooves or score lines have a width of between 1 and 5 mm and a depth of between 1 and 5 mm.

6. The dough product of claim 1 in the form of a sheet having a thickness of between 0.5 and 3 cm.

7. The dough product of claim 1, further including solid pieces or inclusions of edible material.

8. The dough product of claim 7, wherein said pieces or inclusions are made of chocolate in an amount of between 0,1 and 30 % by weight of the dough product.

9. The dough product of claim 7, wherein the chocolate pieces or inclusions are between 1 and 10mm in size.

10. The dough product of claim 1, wherein the flour is present in an amount of between 10 and 40 % by weight, the sugar is present in an amount of 10 and 40 % by weight, and the fat is present in an amount of between 10 and 25% by weight, and further including a texturising agent in an amount of up to 10 %.

11. The dough product of claim 10, wherein the texturising agent is whole egg or egg white and is present in an amount of between 2 and 5 % by weight.

12. The dough product of claim 1 in the form of a block having at least two different dough layers.

13. The dough product of claim 1 in the form of a block wherein each piece includes at least two different dough strips.

14. The dough product of claim 1 wherein at least some of the pieces have different colors.

15. The dough product of claim 1 wherein at least some of the pieces have a filling therein.

16. The dough product of claim 1 wherein at least some of the pieces have a different filling therein.

17. The dough product of claim 1 wherein at least some of the pieces have different surface decorations.

18. The dough product of claim 1 in the form of a block that defines pieces of different sizes or shapes.

19. The dough product of claim 1 wherein the bakery dough product is broken into pieces, which are all placed in a baking tin or that pieces are placed in individual small trays, forms, shaped baking cases, trays or moulds.

20. The dough product of claim 1 wherein it comprises each at least two different doughs swirled together.

## Patentansprüche

1. Backwaren-Fertigteigprodukt, das im Kühlschrank aufbewahrt werden kann und das aus Mehl, Zucker, Backpulver und Fett zubereitet ist, wobei das Backpulver in einer Menge zwischen 0,1 und 3,0 % vorliegt und das Teigprodukt in einer Form bereitgestellt ist, die vorgeschnitten ist oder die Rillen oder Kerblinien darauf aufweist, die Stücke des Teigprodukts zum Backen als fertige Backware bestimmen, und wobei der Wassergehalt 13,5 % bis 20 % beträgt.

2. Teigprodukt nach Anspruch 1 in Form eines Parallelepiped-Blocks mit einer Oberfläche, die die Rillen oder Kerblinien darauf aufweist.

3. Teigprodukt nach Anspruch 2, wobei die Rillen oder Kerblinien Portionen des Blocks festlegen, die von im Wesentlichen gleicher Größe sind.

4. Teigprodukt nach Anspruch 2, wobei der Block ein Parallelepiped-Block ist und die Stücke eine Größe zwischen 3 und 4 cm und eine Dicke zwischen 0,5 und 3 cm haben.

5. Teigprodukt nach Anspruch 2, wobei die Rillen oder Kerblinien eine Breite zwischen 1 und 5 mm und eine Tiefe zwischen 1 und 5 mm aufweisen.

6. Teigprodukt nach Anspruch 1 in Form einer Platte mit einer Dicke zwischen 0,5 und 3 cm.

7. Teigprodukt nach Anspruch 1, das ferner feste Stücke oder Einschlüsse von essbarem Material einschließt.

8. Teigprodukt nach Anspruch 7, wobei die Stücke oder Einschlüsse aus Schokolade sind und in einer Menge zwischen 0,1 und 30 Gew. % des Teigprodukts vorliegen.

9. Teigprodukt nach Anspruch 7, wobei die Schokoladenstücke oder Einschlüsse zwischen 1 und 10 mm groß sind.

10. Teigprodukt nach Anspruch 1, wobei das Mehl in einer Menge zwischen 10 und 40 Gew. % vorliegt, der Zucker in einer Menge von 10 bis 40 Gew. % vorliegt und das Fett in einer Menge zwischen 10 und 25 Gew. % vorliegt und wobei es ferner ein texturgebendes Mittel in einer Menge von bis zu 10 % umfasst.

11. Teigprodukt nach Anspruch 10, wobei das texturgebende Mittel ganzes Ei oder Eiweiß ist und in einer Menge zwischen 2 und 5 Gew. % vorliegt.

12. Teigprodukt nach Anspruch 1 in Form eines Blocks mit zumindest zwei unterschiedlichen Teigschichten.

13. Teigprodukt nach Anspruch 1 in Form eines Blocks, wobei jedes Stück zumindest zwei unterschiedliche Teigstreifen umfasst.

14. Teigprodukt nach Anspruch 1, wobei zumindest einige der Stücke unterschiedliche Farben haben.

15. Teigprodukt nach Anspruch 1, wobei zumindest einige der Stücke eine Füllung aufweisen.

16. Teigprodukt nach Anspruch 1, wobei zumindest einige der Stücke eine unterschiedliche Füllung aufweisen.

17. Teigprodukt nach Anspruch 1, wobei zumindest einige der Stücke unterschiedliche Oberflächendekorationen aufweisen.

18. Teigprodukt nach Anspruch 1 in Form eines Blockes, der Stücke unterschiedlicher Größen oder Formen bestimmt.

19. Teigprodukt nach Anspruch 1, wobei das Back-Teigprodukt in Stücke gebrochen wird, die alle auf einem Backblech platziert werden, oder die Stücke werden in individuellen Förmchen, Formen, geformten Backkästen, Tabletts oder Mulden platziert.

20. Teigprodukt nach Anspruch 1, wobei es zumindest zwei unterschiedliche Teige, die miteinander verflochten sind, umfasst.

## Revendications

1. Produit de pâte de boulangerie prêt à l'emploi qui peut être conservé dans le réfrigérateur et qui est préparé à partir de farine, de sucre, de levure chimique et de matière grasse, dans lequel la levure chimique est présente dans une quantité comprise entre 0,1 et 3,0 % et le produit de pâte se présente sous une forme qui est prédécoupée ou qui comprend des rainures ou des pliures sur celui-ci définissant les morceaux du produit de pâte devant être cuit en éléments de boulangerie finaux, et dans lequel la teneur en eau est de 13,5 % à 20 %.

2. Produit de pâte selon la revendication 1, sous la forme d'un bloc parallélépipède ayant une surface qui comprend les rainures ou pliures dans celui-ci.

3. Produit de pâte selon la revendication 2, dans lequel les rainures ou pliures définissent des portions du bloc qui sont de taille sensiblement égale.

4. Produit de pâte selon la revendication 2, dans lequel le bloc est un bloc parallélépipède et les morceaux ont une taille comprise entre 3 et 4 cm et une épaisseur comprise entre 0,5 et 3 cm.

5. Produit de pâte selon la revendication 2, dans lequel les rainures ou pliures ont une largeur comprise entre 1 et 5 mm et une profondeur comprise entre 1 et 5 mm.

6. Produit de pâte selon 1a revendication 1 sous la forme d'une feuille ayant une épaisseur comprise entre 0,5 et 3 cm.

7. Produit de pâte selon la revendication 1, comprenant en outre des morceaux ou inclusions solides de matière comestible.

8. Produit de pâte selon la revendication 7, dans lequel lesdits morceaux ou inclusions sont constitués de chocolat dans une quantité comprise entre 0,1 et 30 % en poids du produit de pâte.

9. Produit de pâte selon la revendication 7, dans lequel les morceaux ou inclusions de chocolat ont une taille comprise entre 1 et 10 mm.

10. Produit de pâte selon la revendication 1, dans lequel la farine est présente dans une quantité comprise entre 10 et 40 % en poids, le sucre est présent dans une quantité comprise entre 10 et 40 % en poids, et la matière grasse est présente dans une quantité comprise entre 10 et 25 % en poids, et comprenant en outre un agent de texture dans une quantité pouvant atteindre 10 %.

11. Produit de pâte selon la revendication 10, dans lequel l'agent de texture est l'oeuf entier ou le blanc d'oeuf et est présent dans une quantité comprise entre 2 et 5 % en poids.

12. Produit de pâte selon la revendication 1 sous la forme d'un bloc ayant au moins deux couches de pâte différentes.

13. Produit de pâte selon la revendication 1 sous 1a forme d'un bloc dans lequel chaque morceau comprend au moins deux bandes de pâte différentes.

14. Produit de pâte selon la revendication 1, dans lequel au moins certains morceaux ont différentes couleurs.

15. Produit de pâte selon la revendication 1, dans lequel au moins certains morceaux ont une garniture à l'intérieur ceux-ci.

16. Produit de pâte selon la revendication 1, dans lequel au moins certains morceaux ont une garniture différente à l'intérieur de ceux-ci.

17. Produit de pâte selon la revendication 1, dans lequel au moins certains morceaux ont différentes décorations de surface.

18. Produit de pâte selon la revendication 1 sous la forme d'un bloc qui définit des morceaux de différentes tailles ou formes.

19. Produit de pâte selon la revendication 1, dans lequel le produit de pâte de boulangerie est divisé en morceaux, qui sont tous placés dans un moule de cuisson ou ces morceaux sont placés dans de petits plateaux, formes, supports de cuisson profilés, plateaux ou moules individuels.

20. Produit de pâte selon la revendication 1, qui comprend chacun au moins deux différentes pâtes mélangées.
